# EUROPEAN PATENT SPECIFICATION

(11) **EP 1 430 952 B1**
(45) Date of publication and mention of the grant of the patent: **23.03.2011**
(21) Application number: 03028497.0
(22) Date of filing: 12.12.2003
(51) Int. Cl.: F23G 5/02, F01K 3/24, B03B 9/06

(54) **Method and plant for the use of waste in a conventional electrical power plant**
Verfahren und Anlage zur Verwendung von Abfall in einem elektrischen Kraftwerk
Procédé et installation pour utiliser des déchets dans une centrale électrique

(30) Priority: 20.12.2002 IT MI20022725
(43) Date of publication of application: 23.06.2004
(73) Proprietor: ECODECO S.R.L., 20124 Milano (IT)
(72) Inventor: Natta, Giuseppe, 27010 Giussago (PV) (IT); Donati, Gianni, 27010 Giussago (PV) (IT)
(74) Representative: Minoja, Fabrizio

(56) References cited:
- EP-A- 0 399 104
- US-A- 3 884 193
- PATENT ABSTRACTS OF JAPAN vol. 1998, no. 06, 30 April 1998 (1998-04-30) & JP 10 047638 A (HITACHI LTD; HITACHI ENG CO LTD; HITACHI ENG & SERVICES CO LTD), 20 February 1998 (1998-02-20)

## Description

### FIELD OF APPLICATION

The present invention relates in general to the use of the heat produced by the combustion of solid waste or of non-conventional fuel derived therefrom and more generally of renewable energy sources for the improvement in consumption of non-renewable sources, such as fossil fuels, in conventional electrical power plants widely distributed and operating countrywide.

### STATE OF THE ART

Methods are known for the use of biomasses, waste, particularly municipal solid waste (MSW), or at least of a fraction of the same, or fuels derived from waste (RDF) in order to obtain energy, generally electrical energy in that this is energy not necessarily useable in situ and available for distribution throughout the country.

These known methods involve combustion of the waste, previously broken up if necessary, in grid reactors, with boiling fluidised bed and with recirculating fluidised bed with subsequent production in the boiler, by means of heat exchange with the combustion gases, of steam to be expanded in an electrical energy generator according to the technique known in the field.

A main disadvantage of these known methods is represented by their low energy yield, in the region of 20% compared to the 40% yield of conventional thermoelectric power plants, due to the low temperatures and pressures possible in the steam pipes of the boiler, which restrict the enthalpy gradients attainable in the turbine, and to the small scale.

The low temperatures and pressures are due to the known problems of corrosion and contamination of the steam pipes with chlorine and high quantities of ash.

The small scale is mainly due to the fact that the quantity of energy which can be obtained from waste produced in a certain area is from one to two orders of magnitude smaller than that consumed in the same.

The small scale, together with the high costs of the machinery operating with often heterogeneous solids and in aggressive conditions, make an isolated plant for production of electrical energy from waste uneconomical.

The problem of the heterogeneity of the waste was recently tackled by preparing, in intermediate plants, primed and homogeneous waste which can enable improved feeding of the plants and improved control of the combustion process.

When this prepared waste fulfills standards relating to the low heat value and ash and water content, it is termed fuel obtained from waste or secondary fuel (SF) or non-conventional fuel or refuse-derived fuel (RDF).

These terms are to be considered herein below as synonyms of the same product.

Herein under, the term waste will refer both to municipal solid waste (MSW) from non-selective collection and waste from selective collection, and fractions, separated from this waste, containing digestible material, and biomasses from set-aside land, and biomasses contained in waste or refuse from other agricultural and/or industrial processes and from the purification of effluent containing an organic and digestible fraction.

European patent EP 706839, in the name of the same Applicant, describes an energy-efficient method for the production from municipal solid waste of a secondary fuel (SF) with high low heating value, which uses as energy for evaporating water the heat of digestion of the putrescible fraction contained in the waste to be treated. The fractions with an inorganic base, that, during combustion produce ash, are separated. Since the weight of the waste prepared in this way is equal to approximately 50% of the original weight and the low heat value is over double that of the input waste, a waste preparation process of the type mentioned above allows the energy contained in the original, untreated waste to be concentrated by approximately four times.

In this way transfer stations (ITS®) can be built which enable the waste to be received locally and its energy to be concentrated in an SF which can be easily and economically transported to centralised plants for the production of electrical energy.

In Italian patent no. 1297234, in the name of the same Applicant, a method and apparatus are described for the preparation and transport to the end user of an SF.

In this way the problem of heterogeneity of the waste is solved, the heat value raised to values over 3600 kcal/kg and the problem of logistics and handling and feeding of solids improved, although the problem of low yields, small scale and high investments is not solved.

Contrarily large thermoelectric power plants, even without combined cycles, that is to say with expansion of the combustion gases in gas turbines before use in the boiler for the production of steam, have yields close to 40%.

The patent of the same Applicant, VI 2002 A 000180, therefore describes direct use of the heat of the SF combustion fumes, appropriately purified in the boiler of the plant, in order to supply said boiler with additional energy and at the same time regulate the flame temperature for the purposes of control during production of NOx (nitrous oxides).

Greater efficiency of electrical energy generation from the SFs by this method is claimed, compared to that which can be obtained from a dedicated small-scale plant.

The manner in which this heat transfer is performed at the real plant and the control methods to be used for combined operation of the two plants are not however described in detail.

EP 399104 describes a process for supplying heat to the plant by the waste combustion system, mainly via steam at medium and low pressure sent directly to the turbine.

In the case of medium pressure however, since the steam is superheated, pressures and above all temperatures are required which can exceed the limits admitted in the waste plant.

Moreover the flue gases of the waste combustor are not reused.

The use of the surplus for heating the recycled condensates and afterburning of the fumes in the boiler of the power plant is only foreseen as an option.

US 4852344 describes a process wherein the clean fumes of a gas turbine are fed into the waste combustor. This method appears to suffer from considerable disadvantages linked to the aforementioned problems of corrosion of the boiler fed, to the low quality of the steam produced and to the low electrical yields, corresponding to those of the cycle of the waste combustion plant (20 - 22%). In other words an efficient system such as the gas turbine is linked to a low-efficiency system such as the waste boiler and combustor.

At this point mention should be made of the fact that the energy produced from renewable sources is subject to green certificates whose value is in the range of 0.084 €/kWh and that the MSW or SFs derived therefrom are to be considered 50% green.

Therefore the technical and economic aspects of efficiency are affected, in addition to the fossil fuel saved (N.G. 163 €/kNm³), also by the premium paid via the green certificates to the producer of electrical energy from renewable sources.

### Description of the invention

The general object of the present invention is that of eliminating the disadvantages mentioned above and to make available a method and a plant for obtaining, simply, cleanly and with a high yield, electrical energy from waste, in particular SF, using large conventional thermoelectric power plants.

The main object of the present invention is therefore that of increasing, via management of the combination of an SF combustion plant with a conventional power plant, the technical and economic efficiency of the electrical power plant beyond the limits admitted by the prior art.

A further object of the invention is that of bringing the yields of conversion of the SFs into electrical energy to the typical levels of the steam cycles of the conventional power plant, allowing direct and indirect reduction, through the added value of the green certificates, in the consumption of fossil fuels.

Another object of the invention is that of allowing this operation to be performed with the SF combustion plant at constant load, whereas the power plant operates at different loads according to market demands, and identifying simple and adequate control and operation means.

Yet another object of the invention is that of making available a method and a plant for supplying to the thermoelectric power plant the energy contained in the SFs or solid waste in the form of clean fluids.

A further object is that of making available a method and a plant which enables use of existing sites for installation of plants for production of energy from solid waste, in particular from SFs.

An additional object is that of making available a method and a plant for incineration with cogeneration of electrical energy from waste, prepared waste or secondary fuels, economical and easy to manage.

A particular object of the invention is that of allowing absorption of all the pressurised steam produced by the waste combustion plant.

These objects and others which are to be explained in greater detail herein below are achieved by a method for the use of waste, in particular municipal solid waste, in a combined cycle thermoelectric power plant, wherein electrical energy is produced by combustion of fossil fuels, with the features of claim 1.

A further development said method comprises the following working phases:
a) preparation of waste for combustion;
b) combustion of the waste thus prepared so as to obtain a flue gas with a predetermined excess of air and temperature, and a quantity of steam at predetermined heat content (enthalpy) levels;
c) purification of said gas mixture;
d) use of said purified gas mixture in place of all or part of the fumes recycled to the boiler;
e) use of said steam produced in the steam boiler of the power plant;
wherein said phase b) of waste combustion is carried out with a predetermined excess of air so as to achieve complete combustion of the waste and obtain a flue gas with an oxygen content close to that of the gases recycled to the boiler
wherein said phase d) of use of said purified gas mixture takes place in the steam boiler to such an extent as to allow total destruction also of the micropollutants released within legal limits by the combustion system, and a further reduction, in an environment with high temperature and low oxygen, in the residual traces of NOx (nitrous oxides) of the plant for combustion of secondary fuels (SFs) and those produced by the combustor of the plant;
wherein said phase e) of use of the steam produced is performed directly in the cylindrical body of the boiler with possible elimination of all or part of the excess steam bled from the turbine particularly at low loads of the power plant.

According to a further aspect of the invention a plant is provided for implementation of the method in accordance with claim 15.

This method and this plant enable a conventional thermoelectric power plant to be fed with a clean fluid, free from particulate and which observes environmental regulations regarding stack emissions.

Moreover any subsequent combustion in the boiler of the power plant allows further reduction and/or complete destruction of any micropollutants, therefore well below legal limits, which may be present in the hot gases from the SF combustion plant.

Moreover the method and plant according to the present invention enable the yields of conversion of waste into electrical energy to be increased from the typical ones of waste-to-electrical energy production plants to yield values close to those which can be obtained in the steam cycle of the electrical power plant.

Simultaneously, since the waste combustion plant according to the present invention is a plant which does not comprise the heat cycle for the production of electrical energy and is integrated with a larger and often pre-existing combustion plant, the investment costs are incomparably lower compared to an SF combustion plant with electrical energy production.

Nevertheless the greatest advantage is obtained in the electrical power plant where the supply of external energy at competitive costs and with a premium in terms of green certificates means that the system of the SF combustor with the electrical power plant can be considered a new technology capable of ensuring the production of electrical energy at competitive costs on the market.

### Brief description of the drawings

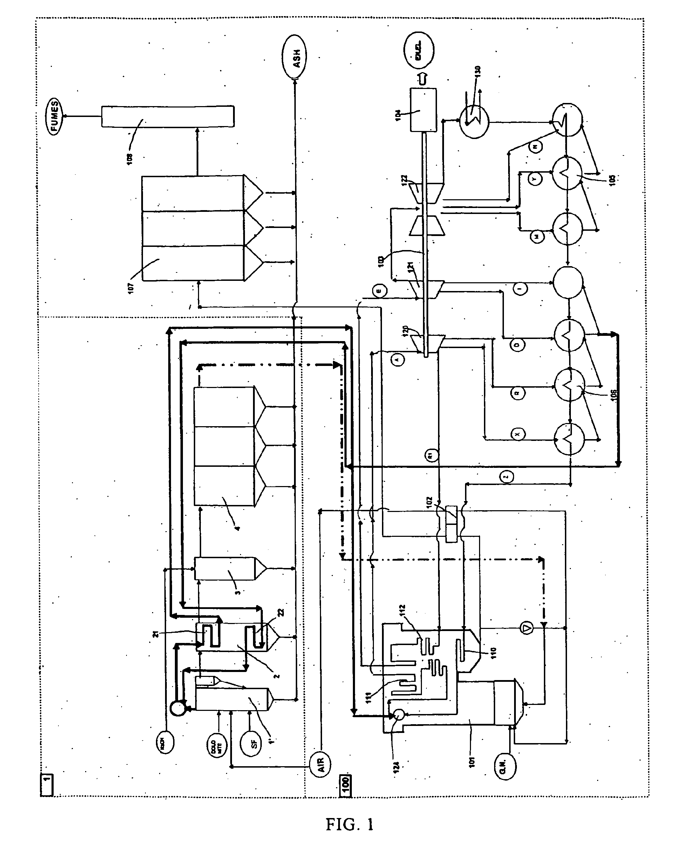

Additional features and advantages of the invention will be made clearer from the following detailed description of a method and a plant for use of SFs in conventional thermoelectric power plants, given by way of a non-limiting example, with the aid of the drawing which shows a process diagram of the combined plant of an SF combustor and of an electrical power plant, wherein the linked SF combustor is capable of producing purified hot fumes and saturated or superheated steam to be used in the power plant.

### Detailed description of a preferred embodiment

With reference to the accompanying drawing, reference numeral 1 denotes a plant for use of SF for the production of hot gases and steam according to the present invention, linked to a conventional thermoelectric power plant denoted by reference numeral 100.

The power plant 100 consists of a boiler 101, a Ljungstrom heat exchanger 102, a steam turbine 103 consisting of three coaxial stages (120, 121, 122), connected to a generator of electrical energy 104, two series of low-pressure 105 and high-pressure 106 preheaters, and an electric filter 107 for removing dust from the gases before sending to the stack 108.

The boiler 101 is of the type with diaphragm walls and cylindrical drum 124, for collecting the recycled condensates Z preheated in the preheaters 105, 106 and in the economiser 110. The boiler produces saturated steam which, from the cylindrical drum 124, is sent to the superheaters 111 for the production of high-pressure steam A.

It is also equipped with a resuperheater 112 for the steam R1 bled from the high-pressure stage of the turbine 120.

The fumes leaving the boiler at approximately 375°C and containing approximately 2.5-3.5% oxygen are cooled in the Ljungstrom 102 at temperatures of around 120 - 140°C before sending to the electrostatic filters 107 and subsequent emission at the stack 108.

Part of these hot fumes are recycled to the boiler and part of these recycled fumes are fed, together with the hot air, to the burner, with the aim of reducing the flame temperature and controlling the formation of NOx.

The high-pressure superheated steam A leaving the superheater 111 is sent to the high-pressure turbine 120 and the resuperheated steam E leaving the resuperheater 112 is sent to the medium-pressure turbine 121.

The steam outlet of the medium-pressure turbine is used in the low-pressure turbine 122 and the outlet of the latter goes to the condenser 130 operating at temperatures even close to 15°C in the winter months.

Steam bleedings X and R are performed on the high-pressure turbine 120, bleedings D and I on the medium-pressure turbine 121 and bleedings M, Y and N on the low-pressure turbine 122.

The power plant can operate at full load producing 320 MW and at low loads with a technical minimum of 70 MW according to grid demands at seasonal, weekly and day/night rates.

The plant 1 for use of secondary fuel for the production of electrical energy according to the present invention, combined with the thermoelectric power plant 100, comprises a combustor 1' with mechanical stoker or fluidised bed or recirculating bed and equipped with a boiler for the production of saturated steam and an exchanger 2, consisting of a system of superheaters 21 and an economiser 22 for cooling the flue gases and preheating the condensates obtained from the plant preheating, and a purification system comprising neutralisation 3 and dust removal 4 of the fumes before sending them to the thermoelectric power plant 100.

Advantageously the combustor 1' is for example of the boiling fluidised bed or recirculating bed type, operating with sand, magnesium carbonate and dolomite at temperatures between 800°C and 900°C, preferably close to 850°C.

The fumes leaving the economiser 2 have a temperature between 150 and 500°C, preferably between 200 and 400°C and in any case such as to allow subsequent purification.

The excess of comburent air in relation to the stoichiometric value is between the stoichiometric value and 200% and preferably such as to guarantee a concentration of oxygen in the fumes around 6% in volume.

The hot gases from heat recovery 2 are neutralised in a post-treatment chamber 3 with soda in solution or with steam soda or with basic carbonates or oxides to remove the sulphur and chlorine not held in the fluidised bed by the neutralising agents present.

Dust removal 4 is performed with bag filters or by means of electrostatic filters at temperatures between 150°C and 500°C and preferably between 200 and 400°C.

Any traces of micropollutants present can be eliminated or reduced during subsequent combustion in the boiler of the electrical power plant and cannot form again, the possible precursors having been separated during neutralisation 3 and filtering 4.

Moreover, again before filtering 4, cold false air can be fed in order to regulate the temperature and enrich the oxygen.

The neutralised and filtered gas is sent onto the recycled fumes of the boiler and can be in such a quantity as to replace them completely.

The slightly superheated or saturated steam leaving the superheater 21 is sent directly into the cylindrical body 124 of the boiler 101 of the electrical power plant wherefrom it is distributed to the superheaters 111 which produce the high pressure steam to be fed to the high pressure turbine 120.

Contrarily the boiler 101 must produce less saturated steam for the cylindrical body and consumes less natural gas.

For this reason recycling of the condensates from the turbine to the boiler is reduced proportionally: a recycled part is used in the SF combustor to produce saturated steam at high pressure and the two boilers (power plant and SF) perform the same type of process in parallel.

Since recycling is reduced, bleeding of the turbine, if maintained at the levels of normal operation, cause greater heating of the condensates recycled to the boiler with feeding into the same boiler of further heat and a reduction in the consumption of natural gas.

Since the power plant operates at a steady rate yet with loads which vary on occasion according to market demands for electrical energy (max. 320 MW, technical minimum 70 MW), excessive superheating of the recycled condensates is to be avoided due to problems of evaporation in the economiser.

For this reason it is possible to reduce or shut down completely bleedings of the turbine, allowing the power plant to absorb all the steam generated in the SF combustor and generating more power in the turbine.

Alternatively, with the same power generated by the turbine, this requires less steam from the boiler with a further saving in the natural gas consumed.

The natural gas saved directly at the meter plus the premium of green certificates for energy from renewable sources allow considerable financial savings on fuel which depend on the scale of the SF combustor and on the load of the plant.

### EXAMPLES

The following are descriptive and non-limiting examples of the invention with loads of the plant varying between 320 MW and 70 MW.

In all regimes, at various loads, an SF combustor 1' with recirculating bed with sand and dolomite, capable of burning 20 t/h of SF with heat value of 4000 kcal/kg has been considered.

The condensates are recycled to said SF combustor, taking them for example after preheating at low pressure 105 at a temperature of approximately 170°C.

The combustor 1' produces 200 t/h of hot fumes at 400°C which are neutralised with soda in solution in a tower 3 with complete evaporation of the solution, and filtered in a bag filter 4 with temperature-resistant screens.

The fumes are fed on the recycled fumes of the boiler 101 of the power plant and replace all or part of said recycled fumes, performing the same function as the same recycled fumes.

The combustor 1' produces 119 t/h saturated steam at 355°C and 173 atmospheres, suitable for being fed into the cylindrical body 124 of the boiler 101 of the power plant.

The following table gives, with the various loads of the power plant maintained stable, the consumption of N.G. of the power plant operating alone and of the same power plant whereto the heat with the process fluids produced by the SF combustion plant has been transferred as indicated previously.

| **LOAD** | **N.G. Power Plant Isolated** | **N.G. Power Plant with SF Combustor** | **N.G. saved and Equivalent Power** | | **PERCENTAGE INCREASE** |
|---|---|---|---|---|---|
| MW | Nm³/h | Nm³/h | Nm³/h | MW | % |
| 321.0 | 77722 | 69155 | 8567 | 35.38 | 11.0% |
| 318.7 | 71636 | 63843 | 7793 | 34.67 | 10.9% |
| 224.5 | 51067 | 43529 | 7538 | 33.13 | 14.8% |
| 129.6 | 29508 | 22026 | 7482 | 32.87 | 25.4% |
| 70.0 | 17443 | 9398 | 8045 | 32.28 | 46.1 % |

The N.G. saved and the equivalent power calculated with the yield of the power plant at the load indicated are given.

It can be seen how the benefit for the power plant is approximately constant in absolute terms, like the heat supplied by the SF combustor.

In percentage terms it varies between 11% and 46% according to the load.

It can also be noted that in order to allow absorption of all the saturated steam produced in the SF plant without causing evaporation of the recycled portion prior to entering the boiler and economiser at low loads it was necessary to turn off some of the steam bled from the turbine.

More particularly at 70 MW bleeding X at high pressure was turned off.

In the case of an SF combustion plant with higher capacity, there is the possibility of turning off other bleeding with proportional increase both in absolute and percentage terms in the saving in N.G. and/or the power produced.

The economic advantage of the procedure of this invention is however higher due to the contribution by the green certificates, and can be estimated as approximately double the technical benefit measured at the meter of the N.G. or the extra energy produced at the terminals of the turbine alternator.

Application of the process of the invention is however such as to innovate and redefine totally the technology of production of electrical energy in conventional power plants.

## Claims

1. Method for the use of waste, in particular municipal solid waste, in a thermoelectric power plant (100) wherein the primary energy is supplied by the combustion of fossil fuels with the supply of comburent air, wherein waste is combusted in a combustion reactor (1') with appropriately controlled air flow rate, the flue gases cooled and purified and said purified flue gases mixed with the comburent air used in said power plant, **characterised in that** pressurised steam is produced by said waste combustion reactor and said pressurised steam is sent directly to the cylindrical body (124) of the boiler (101) of said power plant (100).

2. Method according to claim 1, **characterised in that**, according to the load of the plant, the excess steam bled from the turbine of the power plant in the direction of the recycled condensates preheaters (105, 106) is reduced or totally eliminated so as to absorb all the steam produced by said waste combustion reactor (1').

3. Method according to claim 1, wherein said steam is sent from said cylindrical body (124) to the superheaters (111) for the production of high-pressure steam to be fed to the high-pressure turbine (120) of the power plant.

4. Method according to claim 1, **characterised in that** said pressurised steam from said waste combustion reactor (1') is fed to the cylindrical body (124) of the boiler (101) in conditions such as to integrate the steam produced by the boiler 101 and, with the same power production, with a reduction in the recycled condensates Z and the bled steam which feeds the preheaters (105, 106).

5. Method according to claim 4, **characterised in that** said steam has a temperature of approximately 360°C and a pressure of approximately 180 atm and in any case at or over the pressure of the cylindrical body of the power plant.

6. Method according to any one of the previous claims, wherein the waste is combusted in said combustion reactor at constant load and hence with production of a predetermined quantity of hot fumes and of steam whereas the power plant operates at variable load according to the market demands for energy.

7. Method according to any one of the previous claims, wherein the maximum quantity of steam which can be fed to said preheaters is such as not to heat the condensates recycled to the boiler at a temperature close to that of evaporation in the circuit, with special reference to the minimum load conditions of the power plant.

8. Method according to any one of the previous claims, **characterised in that** the waste is combusted without excess air or with excess air within a range equal to approximately 0-200% and typically around 70%.

9. Method according to claim 1, **characterised in that** said purification of the flue gases is carried out by means of neutralisation with a base and subsequent filtering.

10. Method according to claim 1, **characterised in that** the cooled and purified flue gases are mixed with the comburent air of the power plant so as to replace at least in part recycling of the combustion fumes of the power plant, aimed at reducing the NOx.

11. Method according to claim 1, **characterised in that** said phase of purification of the flue gases is carried out until achieving a content of dust, inorganic acid compounds, condensed polycyclic aromatic compounds and chlorinated organic compounds lower than the predetermined threshold values and compatible with emission into the environment.

12. Method according to claim 1, **characterised in that** the waste is subjected to a preliminary treatment before its combustion so as to prepare a secondary fuel (SF).

13. Method according to claim 12, **characterised in that** pretreatment of said secondary fuel (SF) comprises at least one phase of extraction of metals and/or aggregate from the waste.

14. Method according to claim 13, **characterised in that** the pretreatment of said secondary fuel (SF) comprises a phase of forced aerobic digestion of the waste.

15. Plant for the use of waste in a thermoelectric power plant (100) wherein the plant comprises:
- a primary combustor (101) for fossil fuel having means for the production of pressurised steam,
- a circuit for feeding comburent air at a predetermined temperature,
- a multistage steam turbine (103),
and wherein said waste plant comprises:
- means for the preparation of waste for combustion;
- means for the combustion of waste consisting for example of a fluidised bed combustion reactor (1') with a circuit for cooling by means of circulation of a coolant fluid;
- means for cooling the flue gases to a temperature lower than the maximum temperature compatible with purification;
- means for purification of said cooled flue gases;
- means for mixing said purified and cooled flue gases with the comburent air of the power plant,
**characterised in that** it also comprises:
- means for the production of pressurised steam by said means for the combustion of waste, and
- means for sending said pressurised steam into the cylindrical body (124) of said primary combustor (101).

16. Plant according to claim 15, **characterised in that** means are also provided for gradual turning-off of bleedings from the plant turbine, according to load, so as to absorb all the pressurised steam produced by said waste combustion reactor (1').

17. Plant according to claim 15 or 16, **characterised in that** said combustion reactor (1') produces saturated or slightly superheated steam at a temperature of approximately 360°C and a pressure of approximately 180 atm.

18. Plant according to claim 15, **characterised in that** it comprises means for feeding air to said fluidised bed combustion reactor (1'), it being possible to regulate said means to modify the excess air within a range between 0 and 200% and approximately equal to 70%.

19. Plant according to claim 15, **characterised in that** said means for mixing the purified and cooled flue gases with the comburent air of the main combustor (101) of the power plant are set up to replace at least in part the recycling of the combustion fumes aimed at reducing the NOx.

20. Plant according to claim 15, **characterised in that** said purification means comprise filtering means.

21. Plant according to claim 15, **characterised in that** said means for the preparation of waste comprise means for the preparation of a secondary fuel (SF) from said waste.

22. Plant according to claim 21, **characterised in that** said means for the preparation of said secondary fuel comprise a plant for forced aerobic digestion of said waste.

## Patentansprüche

1. Verfahren zur Verwendung von Abfall, insbesondere von festem Siedlungsabfall, in einem thermoelektrischen Kraftwerk (100), wobei die Primärenergie durch die Verbrennung von fossilen Brennstoffen unter Zufuhr von Verbrennungsluft zugeführt wird, wobei Abfall in einem Verbrennungsreaktor (1') mit geeignet kontrolliertem Luftdurchsatz verbrannt wird, die Abgase gekühlt und gereinigt werden und die gereinigten Abgase mit der in dem Kraftwerk verwendeten Verbrennungsluft vermischt werden, **dadurch gekennzeichnet, dass** durch den Abfallverbrennungsreaktor Druckdampf erzeugt wird, und dass der Druckdampf direkt zu dem zylinderförmigen Körper (124) des Kessels (101) des Kraftwerks (100) geleitet wird.

2. Verfahren nach Anspruch 1, **dadurch gekennzeichnet, dass** entsprechend der Last des Kraftwerks der Überschussdampf, der von der Turbine des Kraftwerks in der Richtung der Vorwärmer (105, 106) für rezyklierte Kondensate austritt, verringert oder vollständig unterbunden wird, so dass der gesamte durch den Abfallverbrennungsreaktor (1') erzeugte Dampf aufgenommen wird.

3. Verfahren nach Anspruch 1, wobei der Dampf von dem zylinderförmigen Körper (124) zu den Überhitzern (111) für die Erzeugung von der Hochdruckturbine (120) des Kraftwerks zuzuführendem Hochdruckdampf geleitet wird.

4. Verfahren nach Anspruch 1, **dadurch gekennzeichnet, dass** der Druckdampf von dem Abfallverbrennungsreaktor (1') dem zylinderförmigen Körper (124) des Kessels (101) unter Bedingungen zugeführt wird, so dass der von dem Kessel (101) erzeugte Dampf integriert wird und, für dieselbe Energieerzeugung, mit einer Verringerung in den rezyklierten Kondensaten Z und dem abgezapften Dampf, der den Vorwärmern (105, 106) zugeführt wird.

5. Verfahren nach Anspruch 4, **dadurch gekennzeichnet, dass** der Dampf eine Temperatur von näherungsweise 360°C und einen Druck von näherungsweise 180 atm und in jedem Fall bei dem oder größer als der Druck des zylinderförmigen Körpers des Kraftwerks aufweist.

6. Verfahren nach einem der vorhergehenden Ansprüche, wobei der Abfall in dem Verbrennungsreaktor bei einer konstanten Last und somit mit einer Erzeugung einer vorherbestimmten Menge von heißen Brandgasen und von Dampf verbrannt wird, während das Kraftwerk bei einer veränderlichen Last entsprechend dem Energiebedarf des Marktes arbeitet.

7. Verfahren nach einem der vorhergehenden Ansprüche, wobei die Maximalmenge von Dampf, die den Vorwärmern zugeführt werden kann, derart ist, dass die in den Kessel bei einer Temperatur nahe der Verdampfungstemperatur in dem Kreislauf rezyklierten Kondensate nicht erhitzt werden, unter besonderer Berücksichtigung der Minimallastbedingungen des Kraftwerks.

8. Verfahren nach einem der vorhergehenden Ansprüche, **dadurch gekennzeichnet, dass** der Abfall ohne Luftüberschuss oder mit einem Luftüberschuss in einem Bereich, der näherungsweise gleich 0-200% ist, und typischerweise von ungefähr 70% verbrannt wird.

9. Verfahren nach Anspruch 1, **dadurch gekennzeichnet, dass** die Reinigung der Abgase durch Neutralisierung mit einer Base und anschließende Filterung durchgeführt wird.

10. Verfahren nach Anspruch 1, **dadurch gekennzeichnet, dass** die gekühlten und gereinigten Abgase mit der Verbrennungsluft des Kraftwerks so vermischt werden, dass wenigstens teilweise eine Rezyklierung der Verbrennungsabgase des Kraftwerks ersetzt wird mit dem Ziel einer Verringerung von NOx.

11. Verfahren nach Anspruch 1, **dadurch gekennzeichnet, dass** die Reinigungsphase der Abgase durchgeführt wird, bis ein Gehalt von Staub, anorganischen Säureverbindungen, kondensierten polyzyklischen aromatischen Verbindungen und chlorierten organischen Verbindungen erzielt wird, der niedriger als die vorherbestimmten Schwellenwerte und mit einer Emission in die Umwelt kompatibel ist.

12. Verfahren nach Anspruch 1, **dadurch gekennzeichnet, dass** der Abfall vor seiner Verbrennung einer Vorbehandlung unterzogen wird, so dass ein Sekundärbrennstoff (SF) erzeugt wird.

13. Verfahren nach Anspruch 12, **dadurch gekennzeichnet, dass** die Vorbehandlung des Sekundärbrennstoffs (SF) wenigstens eine Phase umfasst, in der Metalle und/oder Aggregate aus dem Abfall extrahiert werden.

14. Verfahren nach Anspruch 13, **dadurch gekennzeichnet, dass** die Vorbehandlung des Sekundärbrennstoffs (SF) eine Phase einer erzwungenen aeroben Verdauung des Abfalls umfasst.

15. Anlage zur Verwendung von Abfall in einem thermoelektrischen Kraftwerk (100), wobei das Werk umfasst:
- eine Primärbrennkammer (101) für fossilen Brennstoff mit Mitteln zur Erzeugung von Druckdampf,
- einen Kreislauf zum Zuführen von Verbrennungsluft bei einer vorherbestimmten Temperatur,
- eine mehrstufige Dampfturbine (103),
und wobei die Abfallanlage umfasst:
- Mittel zum Vorbereiten von Abfall zur Verbrennung,
- Mittel zur Verbrennung von Abfall, die beispielsweise aus einem Fließbettverbrennungsreaktor (1') bestehen mit einem Kreislauf zum Kühlen mittels Zirkulation eines Kühlfluids;
- Mittel zum Kühlen der Abgase auf eine Temperatur, die niedriger als die mit einer Reinigung kompatible Maximaltemperatur ist;
- Mittel zur Reinigung der gekühlten Abgase;
- Mittel zum Mischen der gereinigten und gekühlten Abgase mit der Verbrennungsluft des Kraftwerks,
**dadurch gekennzeichnet, dass** sie weiterhin umfasst:
- Mittel zur Erzeugung von Druckdampf durch die Mittel zur Verbrennung von Abfall und
- Mittel zum Leiten des Druckdampfes in den zylinderförmigen Körper (124) der Primärbrennkammer (101).

16. Anlage nach Anspruch 15, **dadurch gekennzeichnet, dass** weiterhin Mittel zum allmählichen Abstellen von Abzapfungen von der Turbine des Werks entsprechend einer Last vorgesehen sind, so dass der gesamte Druckdampf aufgenommen wird, der von dem Abfallverbrennungsreaktor (1') erzeugt wird.

17. Anlage nach Anspruch 15 oder 16, **dadurch gekennzeichnet, dass** der Verbrennungsreaktor (1') saturierten oder geringfügig überhitzten Dampf bei einer Temperatur von näherungsweise 360°C und bei einem Druck von näherungsweise 180 atm erzeugt.

18. Anlage nach Anspruch 15, **dadurch gekennzeichnet, dass** sie Mittel zum Zuführen von Luft in den Fließbettverbrennungsreaktor (1') umfasst, wobei es möglich ist, die Mittel zu regeln, um den Luftüberschuss in einem Bereich zwischen 0 und 200% und näherungsweise gleich 70% zu verändern.

19. Anlage nach Anspruch 15, **dadurch gekennzeichnet, dass** die Mittel zum Mischen der gereinigten und gekühlten Abgase mit der Verbrennungsluft der Hauptbrennkammer (101) des Kraftwerks eingerichtet sind, um wenigstens teilweise die Rezyklierung der Verbrennungsabgase zu ersetzen mit dem Ziel einer Verringerung von NOx.

20. Anlage nach Anspruch 15, **dadurch gekennzeichnet, dass** die Reinigungsmittel Filtermittel umfassen.

21. Anlage nach Anspruch 15, **dadurch gekennzeichnet, dass** die Mittel zum Vorbereiten von Abfall Mittel zum Vorbereiten eines Sekundärbrennstoffs (SF) aus dem Abfall umfassen.

22. Anlage nach Anspruch 21, **dadurch gekennzeichnet, dass** die Mittel zum Vorbereiten des Sekundärbrennstoffs eine Anlage zur erzwungenen aeroben Verdauung des Abfalls umfassen.

## Revendications

1. Procédé pour l'utilisation de déchets, en particulier de déchets solides municipaux, dans une centrale thermoélectrique (100) dans laquelle l'énergie principale est fournie par la combustion de combustibles fossiles avec l'alimentation en air comburant, dans lequel les déchets sont brûlés dans un réacteur de combustion (1') avec un débit d'air commandé de manière appropriée, les gaz de combustion sont refroidis et purifiés et lesdits gaz de combustion purifiés sont mélangés à l'air comburant utilisé dans ladite centrale électrique, **caractérisé en ce que** de la vapeur sous pression est produite par ledit réacteur de combustion de déchets et ladite vapeur sous pression est envoyée directement dans le corps cylindrique (124) de la chaudière (101) de ladite centrale électrique (100).

2. Procédé selon la revendication 1, **caractérisé en ce que**, en fonction de la charge de l'installation, la vapeur en excès purgée de la turbine de la centrale électrique dans la direction des dispositifs de préchauffage de condensats recyclés (105, 106) est réduite ou totalement éliminée de manière à absorber toute la vapeur produite par ledit réacteur de combustion de déchets (1').

3. Procédé selon la revendication 1, dans lequel ladite vapeur est envoyée dudit corps cylindrique (124) aux surchauffeurs (111) pour la production de vapeur à haute pression à délivrer à la turbine haute pression (120) de la centrale électrique.

4. Procédé selon la revendication 1, **caractérisé en ce que** ladite vapeur sous pression provenant dudit réacteur de combustion de déchets (1') est délivrée au corps cylindrique (124) de la chaudière (101) dans des conditions qui intègrent la vapeur produite par la chaudière (101) et, avec la même production de puissance, avec une réduction des condensats recyclés Z et de la vapeur purgée qui alimente les dispositifs de préchauffage (105, 106).

5. Procédé selon la revendication 4, **caractérisé en ce que** ladite vapeur a une température d'environ 360°C et une pression d'environ 180 atm et dans tous les cas à la pression ou au-dessus de la pression du corps cylindrique de la centrale électrique.

6. Procédé selon l'une quelconque des revendications précédentes, dans lequel les déchets sont brûlés dans ledit réacteur de combustion à charge constante et ainsi avec la production d'une quantité prédéterminée de fumées chaudes et de vapeur, tandis que la centrale électrique fonctionne à charge variable en fonction des demandes en énergie du marché.

7. Procédé selon l'une quelconque des revendications précédentes, dans lequel la quantité maximum de vapeur qui peut être délivrée auxdits dispositifs de préchauffage est telle qu'elle ne chauffe pas les condensats recyclés vers la chaudière à une température proche de celle de l'évaporation dans le circuit, avec une référence spéciale aux conditions de charge minimale de la centrale électrique.

8. Procédé selon l'une quelconque des revendications précédentes, **caractérisé en ce que** les déchets sont brûlés sans excès d'air ou avec un excès d'air dans une plage égale à environ 0 à 200 % et généralement autour de 70 %.

9. Procédé selon la revendication 1, **caractérisé en ce que** ladite purification des gaz de combustion est effectuée par neutralisation avec une base et une filtration subséquente.

10. Procédé selon la revendication 1, **caractérisé en ce que** les gaz de combustion refroidis et purifiés sont mélangés avec l'air comburant de la centrale électrique de manière à remplacer au moins en partie le recyclage des fumées de combustion de la centrale électrique, avec pour objectif de réduire le NOx.

11. Procédé selon la revendication 1, **caractérisé en ce que** ladite phase de purification des gaz de combustion est effectuée jusqu'à l'obtention d'une teneur en poussière, en composés acides inorganiques, en composés aromatiques polycycliques condensés et en composés organiques chlorés inférieure aux valeurs de seuil prédéterminées et compatible avec une émission dans l'environnement.

12. Procédé selon la revendication 1, **caractérisé en ce que** les déchets sont soumis à un traitement préliminaire avant leur combustion de manière à préparer un combustible secondaire (SF).

13. Procédé selon la revendication 12, **caractérisé en ce qu'**un prétraitement dudit combustible secondaire (SF) comprend au moins une phase d'extraction de métaux et/ou d'agrégats des déchets.

14. Procédé selon la revendication 13, **caractérisé en ce que** le prétraitement dudit combustible secondaire (SF) comprend une phase de digestion aérobique forcée des déchets.

15. Installation pour l'utilisation de déchets dans une centrale thermoélectrique (100), dans laquelle l'installation comprend :
- une chambre de combustion principale (101) pour un combustible fossile comportant des moyens pour la production de vapeur sous pression,
- un circuit pour fournir de l'air comburant à une température prédéterminée,
- une turbine à vapeur à étages multiples (103),
et dans laquelle ladite installation de déchets comprend :
- des moyens pour la préparation des déchets pour une combustion ;
- des moyens pour la combustion des déchets consistant, par exemple, en un réacteur de combustion à lit fluidisé (1') avec un circuit de refroidissement par la circulation d'un fluide de refroidissement ;
- des moyens pour refroidir les gaz de combustion à une température inférieure à la température maximum compatible avec la purification ;
- des moyens pour purifier lesdits gaz de combustion refroidis ;
- des moyens pour mélanger lesdits gaz de combustion purifiés et refroidis avec l'air comburant de la centrale électrique,
**caractérisée en ce qu'**elle comprend également :
- des moyens pour la production de vapeur sous pression par lesdits moyens pour la combustion de déchets, et
- des moyens pour envoyer ladite vapeur sous pression dans le corps cylindrique (124) de ladite chambre de combustion principale (101).

16. Installation selon la revendication 15, **caractérisée en ce que** des moyens sont également prévus pour une sortie graduelle des produits de purge de la turbine de l'installation, en fonction de la charge, de manière à absorber toute la vapeur sous pression produite par ledit réacteur de combustion de déchets (1').

17. Installation selon la revendication 15 ou 16, **caractérisée en ce que** ledit réacteur de combustion (1') produit de la vapeur saturée ou légèrement surchauffée à une température d'environ 360 °C et à une pression d'environ 180 atm.

18. Installation selon la revendication 15, **caractérisée en ce qu'**elle comprend des moyens pour délivrer de l'air audit réacteur de combustion à lit fluidisé (1'), lesdits moyens pouvant être régulés pour modifier l'air en excès dans une plage entre 0 et 200 % et à peu près égale à 70 %.

19. Installation selon la revendication 15, **caractérisée en ce que** lesdits moyens pour mélanger les gaz de combustion purifiés et refroidis avec l'air comburant de la chambre de combustion principale (101) de la centrale électrique sont réglés pour remplacer au moins en partie le recyclage des fumées de combustion qui a pour objectif de réduire le NOx ;

20. Installation selon la revendication 15, **caractérisée en ce que** lesdits moyens de purification comprennent des moyens de filtration.

21. Installation selon la revendication 15, **caractérisée en ce que** lesdits moyens pour la préparation de déchets comprennent des moyens pour la préparation d'un combustible secondaire (SF) à partir desdits déchets.

22. Installation selon la revendication 21, **caractérisée en ce que** lesdits moyens pour la préparation dudit combustible secondaire comprennent une installation pour une digestion aérobique forcée desdits déchets.
